# EUROPÄISCHE PATENTSCHRIFT

(11) **EP 0 403 893 B1**
(45) Veröffentlichungstag und Bekanntmachung des Hinweises auf die Patenterteilung: **13.07.1994**
(21) Anmeldenummer: 90110865.4
(22) Anmeldetag: 08.06.1990
(51) Int. Cl.: B29C 65/40, C08L 23/08

(54) **Schweissschnur, insbesondere zum Verschweissen von Fussbodenbelägen o. dlg.**
Welding cord, particularly for welding floor coverings or the like
Corde de soudage, notamment pour souder des revêtements de sol

(30) Priorität: 19.06.1989 DE 3919892
(43) Veröffentlichungstag der Anmeldung: 27.12.1990
(73) Patentinhaber: HT TROPLAST AG, D-53839 Troisdorf (DE)
(72) Erfinder: Höver, Alexander, D-5210 Troisdorf-Spich (DE); Lichtenberg, Manfred, D-5208 Eitorf (DE); Simon, Manfred, Dr., D-5216 Niederkassel (DE); Schoepe, Reiner, Dr., D-5210 Troisdorf (DE)

(56) Entgegenhaltungen:
- EP-A- 0 035 630
- EP-A- 0 227 029
- DD-A- 102 951
- DD-A- 143 879
- US-A- 4 670 349

## Beschreibung

Die Erfindung betrifft eine Schweißschnur zum Verschweißen von Fußbodenbelägen.

Aus der am 28.06.89 veröffentlichten EP-A- 0 321 760 ist eine homogene, mehrfarbig strukturierte Kunststoffbahn oder -platte auf Basis hochgefüllter, weichmacherfreier Bindemittel, insbesondere mit Ethylen-Vinylacetat als Bindemittel, bekannt. Diese Kunststoffbahnen oder -platten lassen sich mit herkömmlichen Schweißschnüren auf Basis von weichmacherhaltigem PVC nicht ausreichend verschweissen.

In der EP-A- 0 227 029 wird ein Bodenbelag aus 69 Gew.-% Ethylen-Vinylacetat mit ca. 28 % Vinylacetat, das entspricht einem Vinylacetatanteil von ca. 19 Gew.-%, 30 Gew.-% Füllstoff und 1 Gew.-% Farbstoff beschrieben. Es wird jedoch nicht darauf hingewiesen, ob die Rezeptur dieses Bodenbelages auch für die Erzeugung von Schweißschnüren für die Kunststoffbahnen der EP-OS 0 321 760 geeignet ist.

Aufgabe der vorliegenden Erfindung war es daher, eine Schweißschnur zur Verfügung zu stellen, die die Verschweißung von Kunststoffbahnen oder -platten auf Basis hochgefüllter, weichmacherfreier Bindemittel und von Bahnen oder Platten entsprechend der EP-A- 0 321 760 ermöglicht.

Die erfindungsgemäße Schweißschnur soll insbesondere eine Verschweißung und damit absolute Abdichtungsfunktion bei ausreichender Festigkeit der Schweißnaht erbringen. Sie soll leicht auf- und abrollbar und sowohl durch Einlegen von Hand als auch durch einen Schweißautomaten gut verarbeitbar sein. Sie muß so flexibel sein, daß der überstehende Teil der Schweißschnur nach dem Einlegen und Verschweißvorgang leicht mit einem Messer abzuschneiden bzw. abzuscheren ist.

Die Erfindung löst diese Aufgabe durch eine Schweißschnur entsprechend den Ansprüchen 1 und 2, letzterer bevorzugt in Verbindung mit Unteranspruch 3.

Bevorzugt weist die erfindungsgemäße Schweißschnur einen wesentlich geringeren Anteil an Füllstoffen auf als die zu verschweißende Kunststoffbahn oder -platte. Erfindungsgemäß beträgt der Füllstoffanteil der Schweißschnur bevorzugt weniger als 25 Gew.-%, insbesondere zwischen 15 und 20 Gew.-%. Es ist jedoch auch möglich, füllstoffreie oder nahezu füllstoffreie Schweißschnüre gemäß der Erfindung herzustellen.

Bevorzugt besteht das Bindemittel der Schweißschnur zu mehr als 60 Gew.-% aus Ethylen-Vinylacetat-Copolymerisat, wobei der Vinylacetat-Anteil des EVA bevorzugt 15 bis 30 Gew.-% beträgt. Der Vinylacetat-Anteil, bezogen auf den Gesamtansatz der Schweißschnur, beträgt 10 bis 20 Gew.-%.

Als Zusatze zum Bindemittel werden erfindungsgemäß bevorzugt 10 bis 30 Gew.-% EPDM, bezogen auf den Bindemittelanteil, eingesetzt. Neben EPDM können vorteilhaft auch Polyethylen und Polypropylen in Mengenanteilen von bis zu 5 %, bezogen auf den Bindemittelanteil, zugesetzt werden.

Bevorzugt weist das Bindemittel der erfindungsgemäßen Schweißschnur keine oder nur geringe Anteile von Weichmachern auf. Ggf. können bis zu 5 %, bevorzugt bis zu 2 %, eines Phthalat-Weichmachers zugesetzt werden.

Im Gegensatz zu Schmelzklebern auf EVA-Basis, die nach Erreichen der Schmelztemperatur dünnflüssig werden, bleibt die erfindungsgemäße Schweißschnur auch bei Verarbeitungstemperatur hochviskos bis pastös. Der erfindungsgemäße Ansatz ist wachsfrei und enthalt keine Zusätze von niedrigmolekularen Polyolefinen (Molekulargewicht unter 20 000), Abietinsäureestern, Terpenharzen und anderen bei Schmelzklebern üblichen, die Schmelzviskosität erniedrigenden Zusätzen.

Als Füllstoffe werden bevorzugt 1 bis 20 Gew.-% Kreide oder Kaolin eingesetzt. Als Hilfsstoffe werden insbesondere bis zu 3 Gew.-% einer Antioxidans sowie eines Antistatikums zugesetzt.

Im folgenden wird die Erfindung anhand von Ausführungsbeispielen näher erläutert.

### Beispiel 1

Ein Ansatz, bestehend aus
62,4 Gew.-% Ethylen-Vinylacetat-Copolymerisat mit einem Vinylacetat-Anteil von 20 Gew.-% [bezogen auf das EVA] (Riblene® DHV 1040 X, Fa. Enichem),
14,4 Gew.-% Ethylen-Propylen-Dien-Terpolymerisat [EPDM] (Buna®AP 437, Fa. Hüls AG),
19,2 Gew.-% Kreide (Calcilit®, Fa. Alpha Calcilit),
0,96 Gew.-% Calciumstearat (Ceasit®, Fa. Bärlocher),
0,48 Gew.-% Antioxidans (Irganox® 1010, Fa. Ciba-Geigy),
0,96 Gew.-% Antistatikum (Lankrostat® LA 3, Fa. Harcros Chemicals),
1,6 Gew.-% Farbe,
wird in einem Henschel-Mischer in 5 min. unter Kühlung gemischt. Danach wurde die Mischung über eine Reifenhäuser-Extruder FH 80, Schneckendurchmesser 40 mm, Länge 25 D, wie folgt verarbeitet:
Temperaturzone 1: 115° C
Temperaturzone 2: 150° C
Temperaturzone 3: 130° C
Temperaturzone 4: 115° C
Temperaturzone 5: 80° C
Temperaturzone 6: 70° C
Schneckendrehzahl: 10 min⁻¹.

Das plastifizierte Material wurde zu einem 5 mm starken Strang weiterverarbeitet, abgekühlt und zu Granulat geschnitten. Das so hergestellte Granulat wurde auf demselben Extruder wie folgt verarbeitet:
Temperaturzone 1: 138° C
Temperaturzone 2: 185° C
Temperaturzone 3: 175° C
Temperaturzone 4: 180° C
Temperaturzone 5: 145° C
Temperaturzone 6: 158° C.

Die 4 mm starke Schweißschnur wurde in einem Wasserbad mit einer Bandgeschwindigkeit von 9 m/min. abgezogen, getrocknet und aufgewickelt.

Die Schweißschnur ließ sich sowohl per Hand als auch durch einen Automaten gut verarbeiten.

Zur Prüfung der Festigkeit der Schweißnaht wird aus einer verschweißten Bodenbelags-Probe ein 50 mm breiter Streifen quer zur Nahtrichtung ausgeschnitten und quer zur Nahtrichtung bis zum Reißen der Schweißnaht belastet. Als Bodenbelag wurde eine Bahnenware gemäß dem letzten Beispiel der EP-A- 0 321 760 eingesetzt. Die so ermittelte Reißkraft betrug 296 N.

### Beispiel 2

Ein Ansatz aus:
60,5 Gew.-% Ethylen-Vinylacetat-Copolymerisat mit 28 % VA-Anteil (Riblene® DJV 1055, Fa. Enichem),
14,0 Gew.-% Ethylen-Propylen-Terpolymerisat [EPDM] (Buna® AP 437, Fa. Hüls AG],
3,0 Gew.-% Polyethylen (Lupolen® 1800 SP, BASF),
18,6 Gew.-% Kreide (Calcilit®, Fa. Alpha Calcilit),
0,93 Gew.-% Calciumstearat (Ceasit®, Fa. Bärlocher),
0,46 Gew.-% Antioxidans (Irganox® 1010, Fa. Ciba-Geigy),
0,96 Gew.-% Antistatikum (Lankrostat® LA 3, Fa. Harcros Chemicals),
1.55 Gew.-% Farbe,
wurde in einem Eirichmischer 5 min. gemischt und entsprechend dem Beispiel 1 über einen Reifenhäuser-Extruder im ersten Schritt zu Granulat und danach zu einer 4 mm starken Schweißschnur verarbeitet.
Temperaturzone 1: 143° C
Temperaturzone 2: 167° C
Temperaturzone 3: 173° C
Temperaturzone 4: 179° C
Temperaturzone 5: 163° C
Temperaturzone 6: 186° C.

Die Bandgeschwindigkeit betrug 12 m/min. Die so hergestellte Schweißschnur ließ sich gut verarbeiten. Die Reißkraft nach der Verschweißung betrug 300 N.

### Beispiel 3

Der Ansatz
77,0 Gew.-% Ethylen-Vinylacetat-Copolymerisat mit 20 % VA-Anteil (Riblene® DHV 1040 X, Fa. Enichem),
19,0 Gew.-% Ethylen-Propylen-Dien-Terpolymerisat [EPDM] (Buna® AP 437, Fa. Hüls AG],
0,95 Gew.-% Calciumstearat (Ceasit®, Fa. Bärlocher),
0,48 Gew.-% Antioxidans (Irganox® 1010, Fa. Ciba-Geigy),
0,95 Gew.-% Antistatikum (Lankrostat® LA 3, Fa. Harcros Chemicals),
2,68 Gew.-% Farbe,
wurde entsprechend Beispiel 2 zu einer 4 mm starken Schweißschnur verarbeitet.

Die Temperaturen waren:

### I. Granulatherstellung

Zone 1: 140° C
Zone 2: 170° C
Zone 3: 175° C
Zone 4: 180° C
Zone 5: 162° C
Zone 6: 189° C.

### II. Schweißschnurfertigung

Zone 1: 135° C
Zone 2: 165° C
Zone 3: 175° C
Zone 4: 180° C
Zone 5: 165° C
Zone 6: 209° C.

Die anwendungstechnischen Eigenschaften waren gut. Die Reißkraft nach der Verschweißung betrug 339 N.

### Beispiel 4

Der verwendete Ansatz
61,2 Gew.-% Ethylen-Vinylacetat-Copolymerisat mit 20 % VA-Anteil (Riblene® DHV 1040 X, Fa. Enichem),
14,1 Gew.-% Ethylen-Propylen-Dien-Terpolymerisat [EPDM] (Buna® AP 437, Fa. Hüls AG),
18,8 Gew.-% Kreide (Calcilit®, Fa. Alpha Calcilit),
0,94 Gew.-% Calciumstearat (Ceasit®, Fa. Bärlocher),
0,47 Gew.-% Antioxidans (Irganox® 1010, Fa. Ciba-Geigy),
2,5 Gew.-% Farbe,
1,99 Gew.-% Weichmacher Diisodecylphthalat (Genomoll® 180, Fa. Hoechst),
wurde in einem Henschelmischer FM 250 C 5 min. gemischt, wobei der Weichmacher 180 erst nach Vorgabe der übrigen Komponenten eingefüllt wurde.

Die Granulierung geschah auf einem Reifenhäuser-Extruder 30 D mit einem Schneckendurchmesser von 49/58 mm. Das Mischgut wurde über eine Dosierschnecke zugeführt.
Temperaturzone 1: 140° C
Temperaturzone 2: 180° C
Temperaturzone 3: 170° C
Temperaturzone 4: 160° C
Temperaturzone 5: 160° C
Temperaturzone 6: 160° C
Temperaturzone 7: 160° C
Temperaturzone 8: 150° C
Temperaturzone 9: 150° C.

Es wurden Stränge über eine Lochplatte mit 11 Bohrungen von 5 mm Durchmesser gefertigt, im Wasserbad gekühlt und anschließend granuliert. Das getrocknete Granulat wurde auf demselben Extruder unter gleichen Bedingungen zu Strängen verarbeitet. Die Bandgeschwindigkeit betrug 1,8 m/min. und der Durchmesser der Schweißschnur 4 mm. Das anwendungstechnische Verhalten war gut. Die Reißkraft betrug 340 N.

### Beispiel 5

Der Ansatz
63,41 Gew.-% Ethylen-Vinylacetat-Copolymerisat mit 28 % VA-Anteil (Riblene® DJV 1055, Fa. Enichem),
14,71 Gew.-% Ethylen-Propylen-Dien-Terpolymerisat [EPDM] (Buna® AP 437, Fa. Hüls AG),
1,15 Gew.-% Polypropylen (Novolen® 1300 E, Fa. BASF),
0,43 Gew.-% Polyethylen (Escorene® LD 253),
14,0 Gew.-% Kreide (Calcilit®, Fa. Bärlocher),
5,70 Gew.-% Kaolin (Typ RC 32, Fa. Sachtleben)
0,30 Gew.-% Antistatikum (Lankrostat® LA 3, Fa. Harcros Chemicals),
0,30 Gew.-% Farbe,
wurde in einem Eirichmischer 5 min. gemischt und danach auf einer Berstorff-Walze Typ W 00622 10 min. bei 140° C gewalzt und auf einer Alpine-Mühle Typ A 16/8 über ein 4 mm-Sieb gemahlen.

Die Schweißschnurfertigung wurde auf einem Reifenhäuser-Extruder Typ EH 80 mit einem Schneckendurchmesser von 40 mm und einer Länge von 25 D vorgenommen. Die Bohrung der Düse hatte einen Durchmesser von 4 mm.
Temperaturzone 1: 132° C
Temperaturzone 2: 170° C
Temperaturzone 3: 173° C
Temperaturzone 4: 180° C
Temperaturzone 5: 164° C
Temperaturzone 6: 208° C.

Die Bandgeschwindigkeit war 12 m/min. Die Schweißschnur ließ sich gut per Hand und Automat verarbeiten. Die Reißkraft nach der Verschweißung betrug 285 N.

## Patentansprüche

1. Verwendung einer Schweißschnur, welche ein Bindemittel auf Basis von Ethylen-Vinylacetat-Copolymerisat (EVA) enthält, wobei der Vinylacetatanteil im Gesamtansatz der Schweißschnur 10 bis 20 Gew.-% und der Anteil der Hilfs- und Füllstoffe 1 bis 30 Gew.-% des Gesamtansatzes beträgt, zum Verschweißen von Fußbodenbelägen, wobei der Fußboden auf der Basis von EVA einen Vinylacetatanteil im Gesamtansatz von 3 bis 14 Gew.-% und einen Anteil an Füllstoffen einschließlich der Hilfsstoffe von 35 bis 80 Gew.-% des Gesamtansatzes enthält.

2. Schweißschnur - zum Verschweißen von Fußbodenbelägen - mit einem thermoplastischen Kunststoff als Bindemittel sowie Gehalten von Hilfs- und ggf. Füllstoffen, wobei das Bindemittel der Schweißschnur
a) 60 bis 80 Gew.-% EVA,
b) 10 bis 30 Gew.-% EPDM,
c) 0 bis 5 Gew.-% PE,
d) 0 bis 3 Gew.-% PP,
e) 0 bis 2 Gew.-% Phthalat-Weichmacher - zusammen 100 Gew.-% -
und der Gesamtansatz der Schweißschnur
1. 75 bis 98 Gew.-% Bindemittel,
2. 0 bis 25 Gew.-% Füllstoff,
3. 0 bis 1,5 Gew.-% Antistatikum,
4. 0 bis 5 Gew.-% Antioxidans und
5. 0,1 bis 3 Gew.-% Farbe, - zusammen 100 Gew.-% -
enthält und wobei der Vinylacetatanteil im Gesamtansatz der Schweißschnur 10 bis 20 Gew.-% und der Anteil der Hilfs- und Füllstoffe 1 bis 30 Gew.-% des Gesamtansatzes beträgt.

3. Schweißschnur nach Anspruch 2, ***dadurch gekennzeichnet,*** daß der Vinylacetatgehalt 15 bis 25 Gew.-%, bezogen auf den Bindemittelanteil, beträgt.

## Claims

1. Use of a welding cord which contains a binder based on ethylene-vinylacetate copolymer (EVA), with the vinylacetate content in the overall composition of the welding cord amounting to 10 to 20 % by weight and the content of auxiliary substances and fillers amounting to 1 to 30 % by weight of the total composition, for the welding of floor coverings wherein the floor contains, based on EVA, a vinylacetate content in the total composition of 3 to 14 % by weight and a filler content inclusive of auxiliary substances of 35 to 80 % by weight of the total composition.

2. Welding cord - for the welding of floor coverings - having a thermo-plastic plastics material as binder as well as contents of auxiliary substances and optionally fillers, wherein the binder of the welding cord contains
a) 60 by 80 % by weight EVA,
b) 10 to 30 % by weight EPDM,
c) 0 to 5 % by weight PE,
d) 0 to 3 % by weight PP,
e) 0 to 2 % by weight of phthalate plasticiser, - together making up 100 % by weight -
and the total composition of the welding cord contains
1. 75 to 98 % by weight binder,
2. 0 to 25 % by weight filler,
3. 0 to 1.5 % by weight antistatic agent,
4. 0 to 5 % by weight antioxidant, and
5. 0.1 to 3 % by weight colorant, - together making up 100 % by weight -
and wherein the vinylacetate content in the overall composition of the welding cord amounts to 10 to 20 % by weight and the content of auxiliary substances and fillers amounts to 1 to 30 % by weight of the overall composition.

3. Welding cord according to claim 2, characterised in that the vinylacetate content amounts to 15 to 25 % by weight related to the amount of binder.

## Revendications

1. Utilisation d'un cordon de soudage, qui contient un liant à base de copolymère d'éthylène et d'acétate de vinyle (E/VAC) et dans lequel la fraction d'acétate de vinyle représente de 10 à 20 % en poids de la composition globale du cordon de soudage et la fraction d'adjuvants et de charges représente de 1 à 30 % en poids de la composition globale, pour le soudage de pièces de revêtement de sol, le revêtement de sol à base d'E/VAC contenant une fraction d'acétate de vinyle représentant de 3 à 14 % en poids de la composition globale, et une fraction de charges, y compris les adjuvants, représentant de 35 à 80 % en poids de la composition globale.

2. Cordon de soudage destiné au soudage de pièces de revêtement de sol, contenant une matière plastique thermoplastique en tant que liant, ainsi que des adjuvants et des charges, le liant du cordon de soudage contenant
a) de 60 à 80 % en poids d'E/VAC,
b) de 10 à 30 % en poids d'EPDM,
c) de 0 à 5 % en poids de PE,
d) de 0 à 3 % en poids de PP,
e) de 0 à 2 % en poids d'un plastifiant de type phtalate, l'ensemble faisant 100 % en poids,
et la composition globale du cordon de soudage contenant
1) de 75 à 98 % en poids de liant,
2) de 0 à 25 % en poids de charge,
3) de 0 à 1,5 % en poids d'un agent antistatique,
4) de 0 à 5 % en poids d'un agent antioxydant, et
5) de 0,1 à 3 % en poids d'un colorant, l'ensemble faisant 100 % en poids,
et la fraction d'acétate de vinyle représentant de 10 à 20 % en poids de la composition globale du cordon de soudage et la fraction d'adjuvants et de charges représentant de 1 à 30 % en poids de la composition globale.

3. Cordon de soudage conforme à la revendication 2, caractérisé en ce qu'il contient de 15 à 25 % en poids d'acétate de vinyle, par rapport à la fraction de liant.
